# EUROPÄISCHE PATENTSCHRIFT

(11) **EP 2 603 789 B1**
(45) Veröffentlichungstag und Bekanntmachung des Hinweises auf die Patenterteilung: **31.10.2018**
(21) Anmeldenummer: 11757191.9
(22) Anmeldetag: 11.08.2011
(51) Int. Cl.: G01N 25/18

(54) **VORRICHTUNG ZUR BESTIMMUNG VON WÄRME- UND TEMPERATURLEITFÄHIGKEITEN EINER MESSPROBE**
DEVICE FOR DETERMINING THERMAL CONDUCTIVITY AND THERMAL DIFFUSIVITY OF A MEASUREMENT SAMPLE
DISPOSITIF POUR DÉTERMINER LA CONDUCTIVITÉ THERMIQUE ET LA DIFFUSIVITE THERMIQUE D'UN ÉCHANTILLON DE MESURE

(30) Priorität: 13.08.2010 DE 102010036992
(43) Veröffentlichungstag der Anmeldung: 19.06.2013
(60) Teilanmeldung: 13159234.7
(73) Patentinhaber: Technische Universität Darmstadt, 64289 Darmstadt (DE)
(72) Erfinder: SASS, Ingo, 64625 Bensheim (DE); SEEHAUS, Rainer, 64291 Darmstadt (DE); BUSS, Arne, 10829 Berlin (DE); STEGNER, Johannes, 64283 Darmstadt (DE)
(74) Vertreter: Katscher Habermann Patentanwälte
(86) Internationale Anmeldenummer: PCT/EP2011/063808
(87) Internationale Veröffentlichungsnummer: WO 2012/020074

(56) Entgegenhaltungen:
- DE-A1- 10 258 817
- FR-A1- 2 643 717
- US-A- 3 733 887
- US-A- 6 142 662
- US-B1- 6 331 075
- HOSTLER S R ET AL: "Thermal conductivity of a clay-based aerogel", INTERNATIONAL JOURNAL OF HEAT AND MASS TRANSFER, PERGAMON PRESS, GB, Bd. 52, Nr. 3-4, 31. Januar 2009 (2009-01-31), Seiten 665-669, XP025817465, ISSN: 0017-9310, DOI: 10.1016/J.IJHEATMASSTRANSFER.2008.07.002 [gefunden am 2008-09-06]
- C. T. EWING ET AL: "Thermal Conductivity of Refactory Materials.", JOURNAL OF CHEMICAL & ENGINEERING DATA, Bd. 7, Nr. 2, 1. April 1962 (1962-04-01), Seiten 251-256, XP55015230, ISSN: 0021-9568, DOI: 10.1021/je60013a029

## Beschreibung

Die Erfindung betrifft eine Vorrichtung zur Bestimmung von Wärmeleitfähigkeiten und Temperaturleitfähigkeiten einer Messprobe mit einer ersten Heizplatte und einer zweiten Heizplatte, mit einer plattenförmigen Probenkammer und mit einer Vergleichsprobenplatte, wobei die Messprobenkammer und die Vergleichsprobenplatte in Reihe zwischen den beiden Heizplatten angeordnet sind, wobei ein Temperatursensor in oder auf der Vergleichsprobenplatte mittig angeordnet ist, und wobei die Temperatur T₁ der ersten Heizplatte und die Temperatur T₂ der zweiten Heizplatte unabhängig voneinander mittels eines Thermostaten regelbar sind..

Aus der Praxis sind verschiedene Vorrichtungen und Verfahren bekannt, mit denen die Wärmeleitfähigkeit einer Messprobe ermittelt werden kann. Als Wärmeleitfähigkeit wird die Eigenschaft eines Probenmaterials bezeichnet, thermische Energie in Form von Wärme durch die Messprobe hindurch zu transportieren. Die Wärmeleitfähigkeit ist eine temperaturabhängige Materialkonstante und wird üblicherweise in W/(Km) angegeben. Die Temperaturleitfähigkeit ist ebenfalls eine temperaturabhängige Materialkonstante, mit der die Geschwindigkeit, mit der sich eine Temperaturveränderung in der Messprobe ausbreitet, charakterisiert werden kann. Die Temperaturleitfähigkeit ist nicht nur von der Wärmeleitfähigkeit, sondern unter anderem auch von der Dichte einer Messprobe und deren spezifischer Wärmekapazität abhängig.

Sowohl die Wärmeleitfähigkeit als auch die Temperaturleitfähigkeit sind beispielsweise wichtige Eigenschaften von Bodenproben, die im Rahmen von geothermischen Untersuchungen ermittelt und im Hinblick auf eine effiziente Nutzung geothermischer Energie ausgewertet werden können.

Bei einer aus der Praxis bereits bekannten Vorrichtung zur Bestimmung der Wärmeleitfähigkeit einer Messprobe wird die Messprobe zwischen zwei Heizplatten angeordnet und über die Heizplatten ein vorgegebener Wärmestrom durch die Messprobe erzeugt. Um sicherzustellen, dass der durch die Heizplatten erzeugte Wärmestrom vollständig durch die Messprobe fließt, sind zusätzliche Heizvorrichtungen mit komplexen elektronischen Regelungen erforderlich, die um die Messprobe herum angeordnet sind und Verlustwärmeströme verhindern sollen. Über die in den Heizplatten erzeugte Heizleistung und die sich in und um der Messprobe einstellenden Temperaturen kann die Wärmeleitfähigkeit berechnet werden.

Bei einer anderen, ebenfalls aus der Praxis bekannten Messverrichtung wird die Messprobe zwischen zwei Referenzplatten mit einer bekannten Wärmeleitfähigkeit angeordnet, die wiederum zwischen Heizplatten angeordnet sind. In einem stationären Zustand werden Temperaturgradienten in den beiden Referenzplatten ermittelt und daraus die Wärmeleitfähigkeit der zwischen den Referenzplatten angeordneten Messprobe berechnet. Als Referenzplatten werden üblicherweise Quarzglasplatten verwendet. Der Einbau der Temperatursensoren in Quarzglasplatten ist aufwendig und kostenintensiv. Aus diesem Grund werden oftmals zusätzliche Kupferplatten benachbart zu den Quarzglasplatten angeordnet, in oder auf denen die Temperatursensoren eingebettet sind. Durch die zusätzlichen Kupferplatten wird der konstruktive Aufbau größer und durch zusätzliche Wärmeübergänge an den Grenzflächen die erreichbare Messgenauigkeit reduziert. Da die Quarzglasplatten nicht druckstabil sind, sondern bei ungleichmäßiger Druckbelastung leicht zerbrechen können, sind derartige Messvorrichtungen nicht dazu geeignet, die Wärmeleitfähigkeit einer Messprobe zu ermitteln, die einem erhöhten Druck ausgesetzt ist, wie er beispielsweise in großer Tiefe in dem Erdboden vorherrscht.

Es sind auch Messvorrichtungen aus der Praxis bekannt, bei denen mehrere Vergleichsprobenplatten aus Quarzglas verwendet werden, deren Wärmeleitfähigkeit näherungsweise mit der zu ermittelnden Wärmeleitfähigkeit der Messproben vergleichbar ist. Die Quarzglasplatten sind jedoch äußerst druckempfindlich und schwer zu handhaben. Eine Druckbeaufschlagung der Messprobe während der Durchführung der Messungen ist nicht oder nur bedingt möglich. Die Anbringung eines Temperatursensors in oder auf einer Quarzglasplatte ist materialbedingt mit einem erheblichen Fertigungsaufwand verbunden. Aus diesem Grund ist es auch aus der Praxis bekannt, die Temperatursensoren in oder unmittelbar auf Kupferplatten anzuordnen, die ihrerseits zusätzlich zwischen den Quarzglasplatten und der Messprobe, bzw. den Heizplatten anzuordnen. Die Temperaturgradienten sind innerhalb der Kupferplatten oftmals vernachlässigbar. Allerdings wird durch die Verwendung von zusätzlichen Kupferplatten die Gesamtdicke der Messvorrichtung erhöht. Insbesondere werden zusätzliche Grenzflächen zwischen dem Material der Kupferplatten und dem angrenzenden Material erzeugt. Durch diese Umstände wird die maximal erreichbare Genauigkeit der Messungen erheblich reduziert. Wenn zu viele einzelne Schichten mit unterschiedlichem Material und jeweils mit Grenzflächen in der Messvorrichtung vorgesehen sind, wird die Ermittlung einer Temperaturleitfähigkeit nahezu unmöglich.

Ein ähnliches Messverfahren wird beispielsweise in US 6,142,662 A beschrieben. Die Messprobe wird zwischen zwei Stahlblöcken angeordnet, die einen stationären Wärmestrom erzeugen können. In den Stahlblöcken sind mehrere Temperatursensoren angeordnet, so dass über die Temperaturdifferenzen an den Grenzflächen der Messprobe deren Wärmeleitfähigkeit ermittelt werden kann.

Bei einer beispielsweise in DE 102 58 817 B4 beschriebenen Vorrichtung wird die Messprobe zwischen zwei jeweils beheizbaren Referenzplatten angeordnet. Die beiden Referenzplatten können von angrenzenden Heizplatten beheizt werden, die von einem Wärmeträgeröl durchströmt und Thermostaten auf eine vorgebbare Temperatur geheizt werden können. In den beiden Referenzplatten sind insgesamt drei Temperatursensoren angeordnet. Bei einer stationären Temperaturverteilung kann durch eine Auswertung der in den beiden Referenzplatten angeordneten Temperatursensoren die Wärmeleitfähigkeit der Messprobe bestimmt werden. Das in dieser Veröffentlichung beschriebene Messverfahren setzt einen stationären Zustand bzw. einen konstanten Wärmestrom durch die Messprobe voraus und ist deshalb nicht dafür geeignet, auch eine Temperaturleitfähigkeit der Messprobe zu ermitteln.

Es wird als eine Aufgabe der vorliegenden Erfindung angesehen, eine Vorrichtung der eingangs genannten Gattung so auszugestalten, dass mit geringem konstruktivem Aufwand eine möglichst rasche und genaue Bestimmung der Wärmeleitfähigkeit ermöglicht wird. Zudem soll in einfacher Weise auch eine Temperaturleitfähigkeitsbestimmung ermöglicht werden.

Erfindungsgemäß ist vorgesehen, dass die Vergleichsprobenplatte aus einem Kunststoffmaterial besteht, in das ein homogen verteiltes Füllmaterial mit einer Wärmeleitfähigkeit von mehr als 1 W/(Km) eingebettet ist. Üblicherweise weisen die beispielsweise bei geologischen Untersuchungen entnommenen Bodenproben Wärmeleitfähigkeiten im Bereich von etwa 1 W/(Km) bis etwa 10 W/(Km) auf. Die aus dem Stand der Technik bekannten Messvorrichtungen, bei denen Vergleichsprobenplatten aus einem Kunststoffmaterial verwendet werden, weist das Kunststoffmaterial regelmäßig eine Wärmeleitfähigkeit von etwa 0,1 - 0,2 W/(Km) auf. Da sich in diesen Fällen die Wärmeleitfähigkeiten der Vergleichsprobenplatten jeweils um etwa eine Größenordnung von der noch zu ermittelnden Wärmeleitfähigkeit der Messprobe unterscheiden, wirkt sich dieses Verhältnis nachteilig auf den Vergleich der Messprobe mit der Vergleichsprobe und dadurch letztendlich auf die Genauigkeit der Messungen aus.

Durch die Verwendung eines mit einem geeigneten Füllmaterial angereicherten Kunststoffmaterials kann die Wärmeleitfähigkeit des Kunststoffmaterials in den für die meisten Messungen bzw. Messproben relevanten Bereich nahezu beliebig vorgegeben und an den erwarteten Wert der Wärmeleitfähigkeit der Messprobe angepasst werden. Mit einem geeigneten Füllmaterial und Herstellungsverfahren kann die Wärmeleitfähigkeit des Kunststoffmaterials beispielsweise in einem Bereich zwischen 0,8 W/(Km) und 1,4 W/(Km) und darüber hinaus variiert, bzw. vorgegeben werden. Die Vergleichsprobenplatte aus Kunststoff ist unempfindlich gegenüber Druck oder Feuchtigkeit und kann nach Abschluss einer Messung leicht gereinigt werden. Ein Temperatursensor kann entweder bereits während der Herstellung der Vergleichsprobenplatte an dem vorgegebenen Ort innerhalb der Vergleichsprobenplatte eingebettet werden oder nachträglich durch eine seitliche Bohrung in die Vergleichsprobenplatte eingebracht werden. Es ist ebenfalls denkbar, dass beispielsweise ein flacher und druckbeständiger Temperatursensor auf der Oberfläche der Vergleichsprobenplatte angeordnet und mit den üblichen Mitteln und Verfahren wie beispielsweise Verkleben oder Verschweißen festgelegt wird.

Vorzugsweise ist vorgesehen, dass die Vergleichsprobenplatte eine Wärmeleitfähigkeit von mehr als 0,7 W/(Km), vorzugsweise von mehr als 1 W/(Km) und besonders vorzugsweise von mehr als 1,4 W/(Km) aufweist.

Ein angestrebter Wert für die Wärmeleitfähigkeit des auf diese Weise modifizierten Kunststoffmaterials kann in einfacher Weise dadurch erreicht werden, dass das in das Kunststoffmaterial eingebettete Füllmaterial ein mineralisches oder keramisches Pulver oder ein Grafitpulver ist. Die Korngröße bzw. die Partikelgröße des in das Kunststoffmaterial eingebrachten Füllmaterials sollte dabei ausreichend klein sein, um eine im Wesentlichen gleichmäßige Temperaturverteilung in der Vergleichsprobenplatte gewährleisten zu können. Insbesondere sollte ausgeschlossen werden können, dass durch eine inhomogene Verteilung des Füllmaterials im Bereich des Temperatursensors lokale Schwankungen und Gradienten bei der Temperaturverteilung bzw. bei dem sich einstellenden Wärmestrom auftreten können. Durch übermäßige Inhomogenitäten innerhalb der Vergleichsprobenplatten könnte eine Bestimmung der Wärmeleitfähigkeit oder der Temperaturleitfähigkeit der Messprobe verfälscht werden.

Um die Duktilität der Vergleichsprobenplatte zu erhöhen ist vorgesehen, dass Fasern in das Kunststoffmaterial eingebettet sind.

Gemäß einer Ausgestaltung des Erfindungsgedankens ist vorgesehen, dass die Vorrichtung eine Druckerzeugungseinrichtung aufweist, mit der eine Druckkraft auf die Messprobenkammer ausgeübt werden kann. Die Druckerzeugungseinrichtung kann steuerbar oder regelbar ausgestaltet sein. Im Bereich der Messprobenkammer kann ein Drucksensor angeordnet sein, um den tatsächlich auf die Messprobe ausgeübten Druck erfassen zu können.

Mit der vorangehend beschriebenen Vorrichtung kann besonders einfach, rasch und zuverlässig eine Temperatur T_{M} in der Mitte auf oder in einem kleinen Abstand dᵥ₁ zu der der Messprobe zugewandten Oberfläche der Vergleichsprobenplatte gemessen und die Wärmeleitfähigkeit oder die Temperaturleitfähigkeit der Messprobe in Abhängigkeit von den vorgegebenen Temperaturen T₁ und T₂, von dem vorgegebenen Abstand dᵥ₁ und von der gemessenen Temperatur T_{M} ermittelt werden.

Eine möglichst genaue Messung einer Wärmeleitfähigkeit oder einer Temperaturleitfähigkeit setzt idealerweise unendlich ausgedehnte Messprobenkammern und Vergleichsprobenplatten voraus, um störende Einflüsse von Randeffekten, von Wärmeverlusten sowie von Wärmeübergängen zwischen Grenzflächen zu vermeiden bzw. vernachlässigen zu können. Untersuchungen haben jedoch ergeben, dass bei Messprobenkammern und Vergleichsprobenplatten, die eine Dicke von einem bis einige Zentimeter aufweisen, bereits ein Durchmesser oder Seitenkantenlängen von 10 cm oder mehr ausreichen, um in der Mitte der Messprobenkammer und der Vergleichsprobenplatte einen Wärmestrom erzeugen zu könnten, der weitgehend unbeeinträchtigt von Randeffekten ist. Es hat sich gezeigt, dass die Ermittlung lediglich eines einzigen Temperaturwertes in der Mitte der Vergleichsprobenplatte entweder auf der der Messprobenkammer zugewandten Oberfläche oder in einem kleinen Abstand dᵥ₁ zu dieser Oberfläche ausreicht, um bei vorgegebenen Temperaturen der beiden Heizplatten eine ausreichend genaue Ermittlung von Werten für die Wärmeleitfähigkeit oder die Temperaturleitfähigkeit des Probenmaterials durchführen zu können. Da während der Durchführung einer Messung lediglich ein Temperaturwert T_{M} gemessen werden muss und die Temperaturen der Heizplatten in bekannter Weise auf vorgegebene Werte geregelt werden können, können die Messungen und deren Auswertungen sehr rasch und präzise durchgeführt werden. Weil neben der Temperaturregelung der Heizplatten lediglich ein Temperatursensor auf oder in der Vergleichsprobenplatte erforderlich ist und ausgewertet werden muss, ist der konstruktive Aufwand für die Durchführung eines derartigen Messverfahrens äußerst gering.

Es wird lediglich vorausgesetzt, dass durch die Heizplatten eine Oberfläche mit einer möglichst genau bekannten Temperatur vorgegeben wird. Diese Temperatur kann auch unterhalb der Umgebungstemperatur liegen, so dass die Heizplatten auch gekühlt werden und Temperaturen unterhalb der Umgebungstemperatur bzw. unter 0° Celsius vorgeben können. Es hat sich als besonders vorteilhaft herausgestellt, wenn die Heizplatten eine erste Temperatur größer als die Umgebungstemperatur und eine zweite Temperatur kleiner als die Umgebungstemperatur vorgeben, so dass die sich einstellenden Temperaturen in der Messprobe und in den Vergleichsplatten näherungsweise der Umgebungstemperatur entsprechen und deshalb nur äußerst geringe Wärmeverluste zur Umgebung hin entstehen.

Im Rahmen des Messverfahrens können die Temperaturen T₁ und T₂ der ersten und der zweiten Heizplatte konstant vorgegeben werden und während eines stationären Zustands die Temperatur T_{M} gemessen werden, um die Wärmeleitfähigkeit zu ermitteln. Um die Temperaturleitfähigkeit zu ermitteln ist vorgesehen, dass mindestens eine der beiden Temperaturen T₁ und T₂ der ersten und der zweiten Heizplatte gemäß einem vorgegebenen Temperaturverlauf verändert wird und dabei die Temperatur T_{M} gemessen wird.

Da die Ermittlung der Wärmeleitfähigkeit einen stationären Zustand des zwischen Heizplatten erzeugten Wärmestroms voraussetzt, ist bereits ein einziger Messwert für die Temperatur T_{M} ausreichend, um die Wärmeleitfähigkeit der Messprobe berechnen zu können. Durch wiederholte Messung der Temperatur T_{M} kann die Präzision des mit diesem Messverfahren ermittelten Wertes für die Wärmeleitfähigkeit gesteigert werden.

Die Temperaturleitfähigkeit ist eine Kenngröße für die Eigenschaft einer Messprobe, wie schnell sich Temperaturänderungen innerhalb der Messprobe ausbreiten. Durch die Heizplatte werden Temperaturänderungen in der Messprobe vorgegeben. Es hat sich gezeigt, dass vorteilhafterweise die Temperatur T_{M} mehrfach in zeitlichen Abständen oder quasi kontinuierlich während der vorgegebenen Temperaturänderung gemessen wird, um aus der dadurch ermittelten zeitlichen Abhängigkeit der Temperaturänderungen die Temperaturleitfähigkeit zu ermitteln.

Es ist ebenfalls möglich, dass in einem ersten Verfahrensschritt mindestens eine Temperatur T₁ und T₂ der ersten und der zweiten Heizplatte gemäß einem vorgebbaren Temperaturverlauf verändert und dabei die Temperatur T_{M} gemessen wird und in einem nachfolgenden Verfahrensschritt die Temperaturen T₁ und T₂ der ersten und der zweiten Heizplatte konstant vorgegeben und die Temperatur T_{M} in einem stationären Zustand gemessen wird, um anschließend die Wärmeleitfähigkeit und in Kenntnis der Wärmeleitfähigkeit die Temperaturleitfähigkeit zu ermitteln. Auf diese Weise wird eine besonders rasche Durchführung beider Messungen ermöglicht. Insbesondere wird der Zeitraum, der für das Erreichen eines stationären Zustandes für die Messung der Wärmeleitfähigkeit erforderlich ist, bereits für die Ermittlung der Temperaturmesswerte benutzt, die für die Berechnung der Temperaturleitfähigkeit herangezogen werden können. Zudem kann auf diese Weise festgestellt und überwacht werden, dass tatsächlich ein stationärer Zustand der Temperaturverteilung und damit des Wärmestroms erreicht wurde, bevor die Messungen für die Wärmeleitfähigkeit durchgeführt werden. Bei der Auswertung der Messergebnisse kann zunächst die Wärmeleitfähigkeit berechnet werden, um anschließend durch eine Auswertung der während der vorausgegangenen Temperaturänderung gemessenen Messwerte die Temperaturleitfähigkeit zu ermitteln. Es ist ebenfalls denkbar, die Wärmeleitfähigkeit und die Temperaturleitfähigkeit mit anderen Methoden zu ermitteln. Lediglich beispielhaft wird auf bereits bekannte Verfahren verwiesen, bei denen periodische Temperaturschwingungen erzeugt und die sich einstellenden Temperaturen zeitabhängig ausgewertet werden. Ein solches Messverfahren wird in "Eine einfache Methode zur Bestimmung der Temperaturleitzahl mit Temperaturschwingungen", S. Prinzen et al., Wärme- und Stoffübertragung 25, 209-214, 1990, Springer-Verlag 1990, beschrieben. Das vorangehend beschriebene Messverfahren kann in einfacher Weise an derartige Auswertemethoden adaptiert werden.

Es kann weiterhin vorgesehen sein, dass auf die Messprobe während der Messung ein vorgebbarer Druck ausgeübt wird. Dadurch können Umgebungsbedingungen für die Messprobe erzeugt werden, wie sie beispielsweise bei einer Tiefe von mehreren zehn bis mehreren hundert Metern im Erdboden vorherrschen. Auf diese Weise können die Wärmeleitfähigkeit und die Temperaturleitfähigkeit von Bodenproben unter realistischen Bedingungen gemessen werden. Eine ansonsten übliche Messung unter Laborbedingungen und die anschließend erforderliche Umrechnung unter Berücksichtigung von realistischen Umgebungsbedingungen ist nicht notwendig, so dass in der Regel empirisch ermittelte Umrechnungsfaktoren und Schätzungen nicht in die Ermittlung der Wärmeleitfähigkeit und der Temperaturleitfähigkeit eingehen müssen, wodurch die Genauigkeit bei der Ermittlung der Wärmeleitfähigkeit gesteigert werden kann.

Es ist ebenso denkbar und für verschiedene Anwendungsfälle vorteilhaft, dass die Messprobe während der Messung einen vorgebbaren Wassergehalt aufweist. Insbesondere bei der Bestimmung von Lockergesteinen oder porösen Bodenproben, die in natürlichen Umgebungsbedingungen regelmäßig nicht vollständig trocken sind, sondern einen bei der Probenentnahme ermittelbaren Wassergehalt aufweisen, kann auf diese Weise die tatsächlich vor Ort gegebene Wärmeleitfähigkeit und Temperaturleitfähigkeit der Bodenprobe ermittelt werden.

Nachfolgend werden Ausführungsbeispiele des Erfindungsgedankens näher beschrieben, wie sie in der Zeichnung dargestellt sind. Es zeigt:
Fig. 1 eine schematische Darstellung der Messprobenkammer und der Vergleichsprobenplatte,
Fig. 2 einen schematischen Temperaturverlauf während der Durchführung von zwei Messungen mit unterschiedlichen Messproben,
Fig. 3 eine exemplarische Darstellung einer erfindungsgemäßen Vorrichtung, mit der die Messverfahren durchgeführt werden können, und
Fig. 4 eine schematische Darstellung der zwischen zwei Heizplatten angeordneten Messprobenkammer und der Vergleichsprobenplatte.

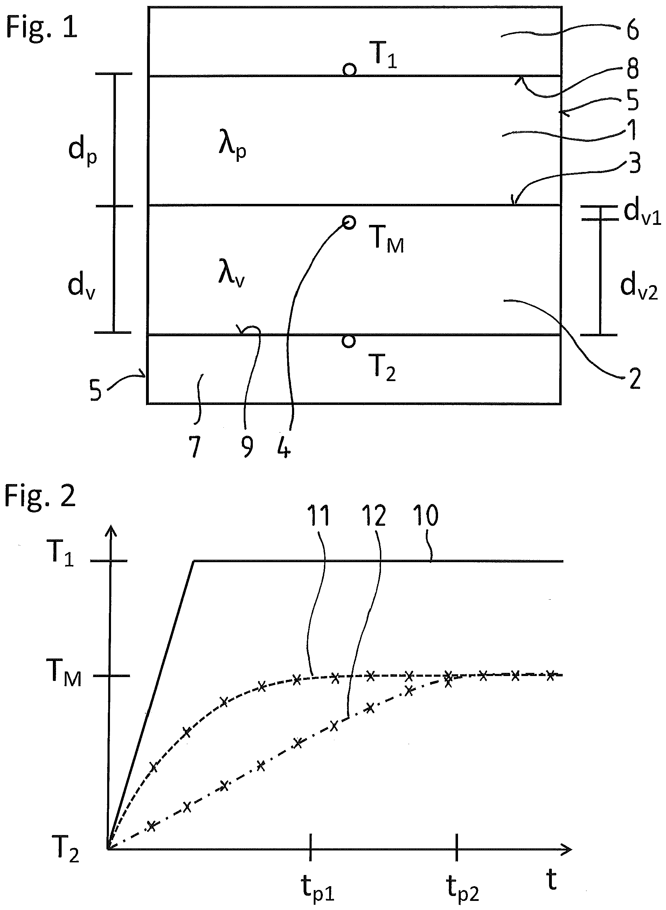

In Fig. 1 werden zur Veranschaulichung schematisch die Messprobenkammer 1 und die Vergleichsprobenplatte 2 dargestellt. Die Vergleichsprobenplatte 2 mit einer Dicke dᵥ weist eine Oberfläche 3 auf, die der Messprobenkammer 1 zugewandt ist und an der die Messprobenkammer 1 thermisch leitend angrenzt. Die Dicke der Messprobenkammer 1 wird mit dₚ bezeichnet. Die Messprobenkammer 1 und die Vergleichsprobenplatte 2 weisen beispielsweise eine kreisförmige Querschnittsfläche mit einem Radius von etwa 10 cm - 20 cm oder eine rechteckförmige Querschnittsfläche mit einer Seitenlänge von ebenfalls 10 - 20 cm auf.

Die Vergleichsprobenplatte 2 besteht aus einem geeigneten Kunststoffmaterial wie beispielsweise Polyphenylensulfid (PPS), in das mineralische und/oder keramische pulverförmige Füllmaterialien eingebettet sind und in das zur Verbesserung der duktilen Eigenschaften Glasfasern eingebettet sind. Die Wärmeleitfähigkeit λᵥ und die Temperaturleitfähigkeit kᵥ der Vergleichsprobenplatte sind durch vorausgehende Untersuchungen sehr genau ermittelt worden und bekannt. In die Messprobenkammer 1 kann eine Messprobe eingebracht werden, die entweder aus einem festen Probenkörper oder aus flüssigem Probenmaterial besteht oder aber ein Schüttgut bzw. eine Lockergesteinsprobe ist. Die durch die Messungen zu ermittelnde Wärmeleitfähigkeit der Messprobe wird mit λₚ bezeichnet.

Da die Vergleichsprobenplatte 2 aus einem Kunststoffmaterial besteht, werden die mechanischen Eigenschaften der Vergleichsprobenplatte 2 durch das Kunststoffmaterial vorgegeben. Im Gegensatz zu zerbrechlichen Vergleichsprobenplatten aus Quarzglas können ohne weiteres großflächige Vergleichsprobenplatten 2 mit einem Durchmesser oder mit Seitenkantenlängen von 1 m, 2 m oder mehr hergestellt und für Messungen verwendet werden. Auf diese Weise können störende Randeffekte weitestgehend unterdrückt werden, ohne dass zusätzliche konstruktive Maßnahmen oder korrigierende Messauswertungen erforderlich werden. Zudem können während einer Messung in dem zur Verfügung stehenden Raum auch begleitend weitere Sensoren angeordnet und gleichzeitig zusätzliche Messungen durchgeführt werden.

In der Vergleichsprobenplatte 2 ist ein Temperatursensor 4 in einem Abstand dᵥ₁ von der Oberfläche 3 der Vergleichsprobenplatte 2 mittig in der Vergleichsprobenplatte angeordnet. Durch die mittige Anordnung des Temperatursensors 4 weist dieser einen zumindest näherungsweise übereinstimmenden Abstand zu gegenüberliegenden Seitenrändern 5 der Vergleichsprobenplatte 2 auf.

Die Messprobenkammer 1 und die Vergleichsprobenplatte 2 sind in Reihe zwischen einer ersten Heizplatte 6 und einer zweiten Heizplatte 7 angeordnet. Die beiden Heizplatten 6, 7 können unabhängig voneinander jeweils durch einen Thermostaten geregelt auf eine vorgebbare Temperatur T₁ der ersten Heizplatte 6 bzw. auf eine Temperatur T₂ der zweiten Heizplatte 7 eingestellt werden.

Die an einer der Messprobenkammer 1 zugewandten Oberfläche 8 der ersten Heizplatte 1 herrschende Temperatur T₁ und die an einer der Vergleichsprobenplatte 2 zugewandten Oberfläche 9 herrschende Temperatur T₂ der zweiten Heizplatte 7 können entweder durch den Thermostaten bzw. eine geeignete Regeleinrichtung erfasst und überwacht werden, oder aber durch gesonderte, in Fig. 1 nicht dargestellte Temperatursensoren gemessen und protokolliert werden.

Wenn zwischen den beiden Heizplatten 6, 7 ein Temperaturgradient erzeugt wird, breiten sich dadurch erzwungene Temperaturänderungen innerhalb der Messprobe in der Messprobenkammer 1 sowie innerhalb der Vergleichsprobenplatte 2 aus, bis ein stationärer Zustand erreicht wird. Wenn dieser stationäre Zustand vorliegt, fließt durch die Messprobenkammer 1 und die Vergleichsprobenplatte 2 ein zeitlich und räumlich konstanter Wärmestrom. Die sich in der Messprobenkammer 1 sowie in der Vergleichsprobenplatte 2 ausbildenden Temperaturgradienten sind von der jeweiligen Wärmeleitfähigkeit λₚ der Messprobe und λᵥ der Vergleichsprobe abhängig.

In Fig. 2 wird exemplarisch ein Verlaufsdiagramm eines Messverfahrens für zwei verschiedene Messproben dargestellt. In beiden Fällen werden beide Heizplatten 6 und 7 auf die Temperatur T₂ geregelt, bis auch die Messprobe und die Vergleichsprobenplatte 2 die Temperatur T₂ aufweisen, was anhand der mit dem Temperatursensor 4 gemessenen Temperatur T_{M} überprüft werden kann. Anschließend wird in kurzer Zeit die Temperatur der ersten Heizplatte 6 auf T₁ vorgegeben und geregelt. Der Temperaturverlauf der ersten Heizplatte 6 ist mit einer durchgezogenen Linie 10 dargestellt. Während der Messdauer wird in Abständen die Temperatur T_{M} mit dem Temperatursensor 4 gemessen. Bei einer Messprobe mit einer hohen Temperaturleitfähigkeit kₚ₁ breitet sich die erzwungene Temperaturänderung rasch durch die Messprobe aus, so dass sich nach einer kurzen Zeit tₚ₁ der stationäre Zustand und damit der Temperaturwert T_{M} einstellt, der eine Bestimmung der Wärmeleitfähigkeit λₚ₁ der Messprobe ermöglicht. Der vorangehend beschriebene Temperaturverlauf ist in dem Diagramm mit einer gestrichelten Linie 11 dargestellt. Der Temperaturverlauf für eine Messprobe mit einer übereinstimmenden Wärmeleitfähigkeit λₚ₂ = λₚ₁, jedoch mit einer deutlich geringeren Temperaturleitfähigkeit kₚ₂ < kₚ₁ ist in dem Diagramm mit einer strichpunktierten Linie 12 dargestellt. Im Vergleich zu der Messprobe mit der größeren Temperaturleitfähigkeit kₚ₁ erreicht die Temperatur der Messprobe erst zu einem sehr viel späteren Zeitpunkt tₚ₂ einen stationären Zustand. Nachdem alle Temperaturmesswerte während der Temperaturänderung sowie anschließend während des stationären Zustands für eine Messprobe gemessen wurden, wird zunächst die Wärmeleitfähigkeit λₚ bestimmt und anschließend die Temperaturleitfähigkeit kₚ ermittelt.

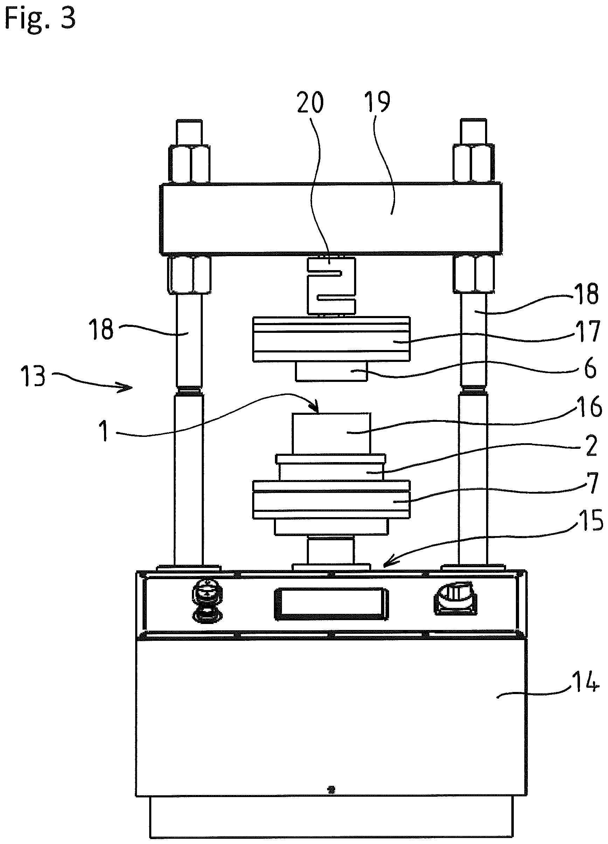

Eine in Fig. 3 exemplarisch dargestellte Vorrichtung 13 zur Bestimmung der Wärmeleitfähigkeiten und der Temperaturleitfähigkeiten einer Messprobe weist ein Gehäuse 14 auf, in welchem die für den Betrieb notwendigen Komponenten beispielsweise zur Energieversorgung, zur Ansteuerung der einzelnen Sensoren und zur Betätigung einer nicht näher dargestellten Druckvorrichtung 15 untergebracht sind. Auf dem Gehäuse 14 sind von unten nach oben dargestellt die zweite Heizplatte 7, die Vergleichsprobenplatte 2 und ein Probenhalterrahmen 16 angeordnet. Der Probenhalterrahmen 16 begrenzt die Messprobenkammer 1, die auf der Vergleichsprobenplatte 2 angeordnet ist. Nach einer Befüllung der Messprobenkammer 1 kann die Messprobenkammer 1 von unten gegen die erste Heizplatte 6 und einen Andruckstempel 17 angehoben werden. An zwei zu beiden Seiten angeordneten Führungsstangen 18 ist ein Druckbalken 19 angeordnet, an dem die erste Heizplatte 6 und der Andruckstempel 17 festgelegt sind. Über eine Kraftmesseinrichtung 20 ist der Druckstempel 17 an dem Druckbalken 19 befestigt. Durch die Druckvorrichtung 15 kann der Anpressdruck des Druckstempels 17 auf die Messprobe in der Messprobenkammer 1 und damit der während einer Messung auf die Messprobe ausgeübte Druck vorgegeben und bei Verwendung eines geeignet angeordneten Drucksensors auch geregelt werden.

Nachdem ein Messvorgang abgeschlossen wurde, kann die Messprobenkammer 1 wieder abgesenkt werden und die Messprobe freigeben. Der Probenhalterrahmen 16 ist zweckmäßigerweise lösbar auf der zweiten Heizplatte 7 oder auf der Vergleichsprobenplatte 2 angeordnet und kann zusammen mit der Messprobe entnommen werden, um eine Reinigung der Vorrichtung 13 und deren Herrichtung für eine weitere Messung zu ermöglichen.

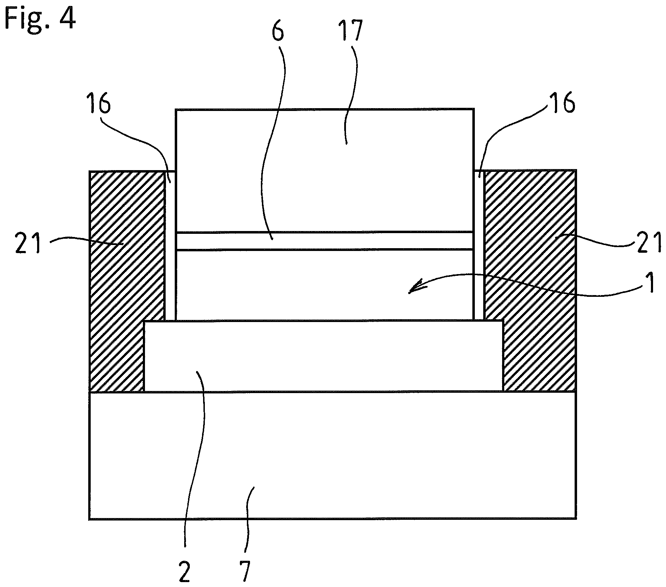

In Fig. 4 ist schematisch und vergrößert eine Teilansicht der Vorrichtung 13 im Bereich der Messprobenkammer 1 dargestellt. Auf der zweiten Heizplatte 7 ist die Vergleichsprobenplatte 2 angeordnet, wobei die zweite Heizplatte 7 seitlich übersteht, um eine Beeinträchtigung durch Randeffekte zu mindern. Auf der Vergleichsprobenplatte 2 ist der Probenhalterrahmen 16 aufgesetzt. Von oben kommend ragt die erste Heizplatte 6 an dem Druckstempel 17 in den Probenhalterrahmen 16 hinein und gibt dadurch die Messprobenkammer 1 vor, die auf beiden Seiten von der Vergleichsprobenplatte 2 und der ersten Heizplatte 6 begrenzt wird. Der Probenhalterrahmen 16 und die Vergleichsprobenplatte 2 sind von einem Isoliermantel 21 umgeben, um eine Beeinträchtigung durch äußere Einflüsse zu minimieren.

## Patentansprüche

1. Vorrichtung zur Bestimmung von Wärmeleitfähigkeiten und Temperaturleitfähigkeiten einer Messprobe mit einer ersten Heizplatte (6) und mit einer zweiten Heizplatte (7), mit einer plattenförmigen Messprobenkammer (1) und mit einer Vergleichsprobenplatte (2), wobei die Messprobenkammer (1) und die Vergleichsprobenplatte (2) in Reihe zwischen den beiden Heizplatten (6, 7) angeordnet sind, wobei ein Temperatursensor (4) in oder auf der Vergleichsprobenplatte (2) mittig angeordnet ist, und wobei die Temperatur T₁ der ersten Heizplatte (6) und die Temperatur T₂ der zweiten Heizplatte (7) unabhängig voneinander mittels eines Thermostaten regelbar sind, **dadurch gekennzeichnet, dass** die Vergleichsprobenplatte (2) aus einem Kunststoffmaterial besteht, in das ein homogen verteiltes Füllmaterial mit einer Wärmeleitfähigkeit von mehr als 1 W/(Km) eingebettet ist.

2. Vorrichtung nach Anspruch 1, **dadurch gekennzeichnet, dass** die Vergleichsprobenplatte (2) eine Wärmeleitfähigkeit λᵥ von mehr als 0,7 W/(Km), vorzugsweise von mehr als 1 W/(Km) und besonders vorzugsweise von mehr als 1,4 W/(Km) aufweist.

3. Vorrichtung nach Anspruch 1 oder Anspruch 2, **dadurch gekennzeichnet, dass** das in das Kunststoffmaterial eingebettete Füllmaterial ein mineralisches oder keramisches Pulver oder ein Grafitpulver ist.

4. Vorrichtung nach einem der vorangehenden Ansprüche, **dadurch gekennzeichnet, dass** in das Kunststoffmaterial Fasern zur Erhöhung der Duktilität eingebettet sind.

5. Vorrichtung nach einem der vorangehenden Ansprüche, **dadurch gekennzeichnet, dass** die Vorrichtung (13) eine Druckerzeugungseinrichtung (15) aufweist, mit der eine Druckkraft auf die Messprobenkammer (1) ausgeübt werden kann.

## Claims

1. A device for determining the heat conductivities and thermal conductivities of a measuring sample, comprising a first heating plate (6) and a second heating plate (7), a plate-shaped measuring sample chamber (1) and a comparison sample plate (2), wherein the measuring sample chamber (1) and the comparison sample plate (2) are arranged in series between the two heating plates (6, 7), wherein a temperature sensor (4) is centrally arranged in or on the comparison sample plate (2), and wherein the temperature T₁ of the first heating plate (6) and the temperature T₂ of the second heating plate (7) can be regulated independently of one another by means of a thermostat, **characterized in that** the comparison sample plate (2) consists of a plastic material with an embedded, homogeneously-distributed filler material having a thermal conductivity of more than 1 W/(Km).

2. The device according to claim 1, **characterized in that** the comparison sample plate (2) has a thermal conductivity λᵥ of more than 0.7 W (Km), preferably of more than 1 W/(Km), and particularly preferably of more than 1.4 W/(Km).

3. The device according to claim 1 or claim 2, **characterized in that** the filler material embedded in the plastic material is a mineral or ceramic powder, or a graphite powder.

4. The device according to one of the preceding claims, **characterized in that** fibers are embedded in the plastic material to increase the ductility.

5. The device according to one of the preceding claims, **characterized in that** the device (13) comprises a pressure-generating means (15), by means of which a pressure force can be exerted on to the measuring sample chamber (1).

## Revendications

1. Dispositif pour déterminer les conductivités et conductibilités thermiques d'un échantillon de mesure avec une première plaque chauffante (6) et une deuxième plaque chauffante (7), avec une chambre à échantillon de mesure (1) sous forme de plaque et une plaque d'échantillon de comparaison (2), ladite chambre à échantillon de mesure (1) et la plaque d'échantillon de comparaison (2) étant disposées en série entre les deux plaques chauffantes (6, 7), un capteur de température (4) étant disposé de façon centrale dans ou sur la plaque d'échantillon de comparaison (2), et la température T₁ de la première plaque chauffante (6) et la température T₂ de la deuxième plaque chauffante (7) étant réglables indépendamment l'une de l'autre au moyen d'un thermostat, **caractérisé en ce que** la plaque d'échantillon de comparaison (2) consiste en une matière plastique dans laquelle est incorporé un matériau de remplissage réparti de manière homogène, présentant une conductivité thermique supérieure à 1 W/(km).

2. Dispositif selon la revendication 1, **caractérisé en ce que** la plaque d'échantillon de comparaison (2) présente une conductivité thermique λᵥ supérieure à 0,7 W/(km), de préférence supérieure à 1 W/(km) et notamment de préférence supérieure à 1,4 W/(km).

3. Dispositif selon la revendication 1 ou la revendication 2, **caractérisé en ce que** le matériau de remplissage incorporé dans la matière plastique est une poudre minérale ou céramique ou une poudre de graphite.

4. Dispositif selon l'une quelconque des revendications précédentes, **caractérisé en ce que** des fibres sont incorporées dans la matière plastique pour accroître la ductilité.

5. Dispositif selon l'une quelconque des revendications précédentes, **caractérisé en ce que** le dispositif (13) présente un générateur de pression (15) avec lequel il est possible d'exercer une force de compression sur la chambre à échantillon de mesure (1).
